# EUROPEAN PATENT SPECIFICATION

(11) **EP 3 504 126 B1**
(45) Date of publication and mention of the grant of the patent: **23.09.2020**
(21) Application number: 17758487.7
(22) Date of filing: 23.08.2017
(51) Int. Cl.: B65D 3/26, B65D 3/06, B65D 85/78

(54) **CONE SLEEVE WITH TEAR STRIP OPENING**
KONISCHE HÜLSE MIT AUFREISSSTREIFENÖFFNUNG
MANCHON CONIQUE DOTÉ D'UNE OUVERTURE À LANGUETTE DE DÉCHIRAGE

(30) Priority: 26.08.2016 EP 16186001
(43) Date of publication of application: 03.07.2019
(73) Proprietor: Société des Produits Nestlé S.A., 1800 Vevey (CH)
(72) Inventor: BAMBAGIONI, Guido, 06126 Perugia (IT)
(74) Representative: Elleby, Gudrun
(86) International application number: PCT/EP2017/071178
(87) International publication number: WO 2018/037027

(56) References cited:
- EP-A2- 0 226 958
- DE-U1- 8 601 222
- JP-A- 2001 171 643

## Description

### Field of the invention

The present invention relates to cone sleeves, in particular for frozen confections such as ice cream cones, comprising a tear strip.

### Background

Ice cream cones are a well-known frozen treat. The packaging needs to provide an adequate protection, for food safety reasons, but also needs to be easy to open so that the consumer can easily access to the ice cream cone.

Consumers are always looking for new experiences and it is important for the products on the market to provide a distinctive packaging that can differentiate them from the existing packages and have an appeal to the consumer without compromising the protection of the product and the convenient opening.

Conventionally, the opening of the cone sleeve is done by horizontally tearing a tab, located in the middle of the sleeve and by pulling this tab around the cone's circumference. This action has been found in some instances to result in paper delamination making the opening difficult. The delamination occurs in the areas where the cone sleeve is glued together.

EP0226958 and EP1484251 disclose cone shaped packaging with a tear tab located externally on the packaging next to a longitudinal seam closing the cone packaging. Both EP0226958 and EP1484251 address the delamination issue.

One solution to this problem has been to provide an opening tab for the cone sleeve positioned at below the upper rim of the cone sleeve. In this configuration the sleeve is no more opened by pulling the tab around the cone in a circumferential movement, but by pulling the tab vertically, from top to bottom of the cone. This type of cone sleeves with a vertical opening are known in the art.

US2012/0138670 discloses a conical packaging for ice cream wafer with a vertical tear strip. A tab connected to the tear strip is protruding from the rim of the packaging.

US 1672884 discloses an ice cream cone protector. A portion of the sleeve can be torn away vertically by tabs protruding from the upper rim of the sleeve in order to be inserted in notches of a cap, securing said cap on top of the cone sleeve.

DE 86 01 222 U1 discloses a container having a tear line which extends over the entire circumference of the peripheral wall, and which is torn away in the circumferential direction.

In traditional industrial production of cone sleeves, the sleeves are manufactured by stamping out cone sheet blanks from a multitude of sheets at the same time. The blanks are then folded around mandrills into cone shaped sleeves, glued together and excessive material is trimmed the upper edge in a trimming operation to ensure an even edge of the on the upper part of the cone sleeve. A production of the above discussed prior art cone sleeves with protruding tabs are not suitable for this type of industrial production of cone sleeves including a trimming operation.

When packaging the ice cream cone, the ice cream cone is inserted into the cone sleeve and the cone sleeve is closed by crimping. In the crimping the cone sleeve's upper rim is being crimped over the lid by a crimping head. This process is not suitable for the cone sleeves with protruding tabs. If a tab is present on the upper rim of the sleeve, the crimping head will flattened it over the lid during the crimping stage or might crumple it, making the tab hard to access and not usable. The tab might even be torn apart during the crimping operation leaving a defect on the packaging.

Thus, there is a need for an alternative opening of packages for ice cream cones that are compatible with industrial cone sleeve manufacturing techniques and allows for an easy opening of the cone sleeve packaging.

### Summary of the invention

The present invention provides a solution to above discussed problems and provides a cone sleeve which allows easy opening of the package and does not interfere in the trimming or crimping process and remains accessible after crimping. Moreover the tear tab of the cone sleeves according to the present invention is compatible with industrial cone sleeves manufacturing techniques.

Accordingly, the present invention relates to a conical cone sleeve (1) for frozen confections, comprising a bottom tip (2) and an upper rim (3), and said upper rim forms a circular opening suitable for receiving a lid (4); wherein the cone sleeve (1) comprises weakening lines (7a, 7b) defining a tear strip (5) with a tear tab (6) on its upper part, and the cone sleeve (1) further comprises at least two openings (8a and 8b), at least one on each side of the tear strip (5), defining the tear tab part (6) of the tear strip (5), and wherein the upper edge (9) of said tear tab (6) is connected to the upper rim (3) of the sleeve by two bridges (13a and 13b).

In a second aspect, the present invention relates to the use of the cone sleeve as discussed above, as a packaging container for a wafer cone filled with a frozen confection such as ice cream, sorbet or combination of ice cream and sorbet.

In a third aspect, the present invention relates to a blank for forming a sleeve suitable for packaging an ice cream cone, the blank having an upper edge which is curved at least in part, two sides edges, at least two openings located near the upper edge and two weakening lines extending from the openings, radially to the upper edge, defining a tear tab part (6) of a tear strip, and wherein the upper edge (9) of said tear tab (6) is connected to the upper blank edge forming the upper rim (3) of the sleeve by two bridges (13a and 13b).

The discussion in the following relating to the cone sleeve also apply to the blank for making a cone sleeve.

### Brief description of the drawings

Figure 1 shows a perspective view of a cone sleeve without a lid and before crimping operations.
Figure 2 shows a perspective view of a cone sleeve with a lid (4) in place. The lowest position of the level of the lid in the cone sleeve is indicated by the lines (12); and before crimping operations.
Figure 3 shows a perspective view of a cone sleeve without a lid and before crimping operations; two distances (A) and (B) are shown on the figure.
Figure 4 shows an enlarged and detailed view of the tear strip (5) area, of the cone sleeve. A width (10) and depth (11) of the two openings (8a and 8b) are indicated. Furthermore, the lowest position of the level (12) of the lid (4) is also indicated.
Figures 5a and 5b show two pictures of cones sleeves after crimping. The pictures are top down views of cone sleeves that are closed by a flat carton lid.

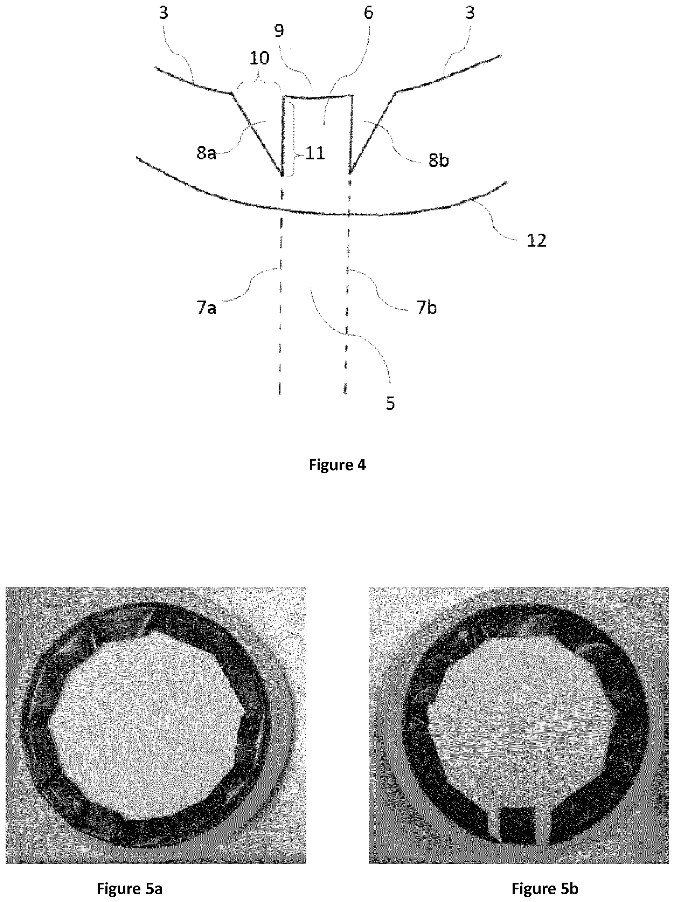

Figure 5a shows a further cone sleeve according to the prior art without a tear tab.
Figure 5b shows a cone sleeve with a tear tab (6) visible and accessible.

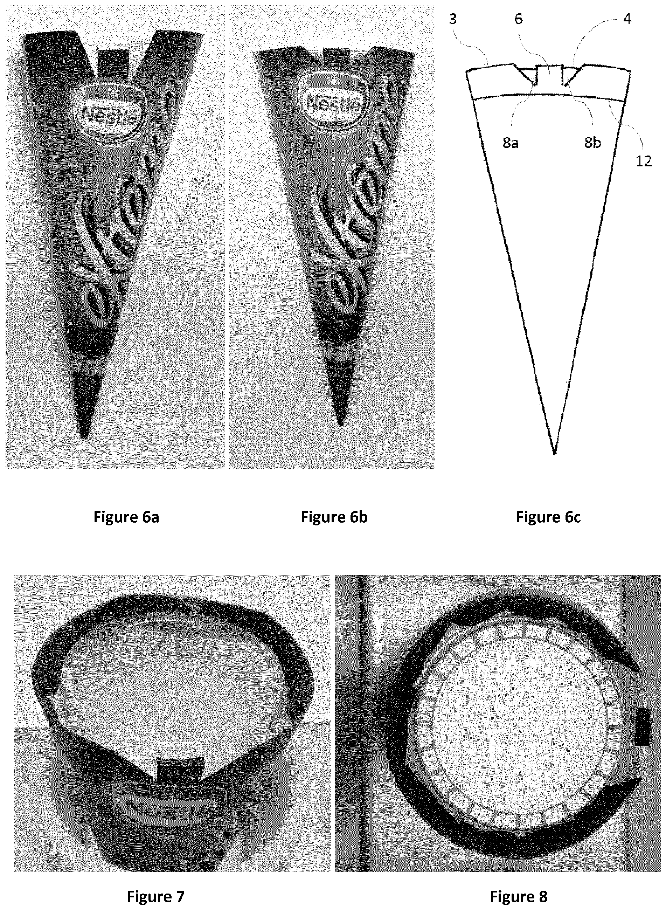

Figures 6a and 6b show two pictures of cones sleeves, whereby both pictures are side views.
Figure 6a shows a cone sleeve before crimping.
Figure 6b shows the cone sleeve disclosed in figure 6a, after crimping. The cone is closed by a plastic lid with a 13 mm deep groove.
Figure 6c shows a representation of the cone sleeves disclosed in figure 6b. The lowest position of the level of the plastic lid is indicated.
Figure 7 shows a picture with a perspective view of the cone sleeve as disclosed in figure 6b.
Figure 8 shows a picture with a top down view of the cone as disclosed in figure 6b.

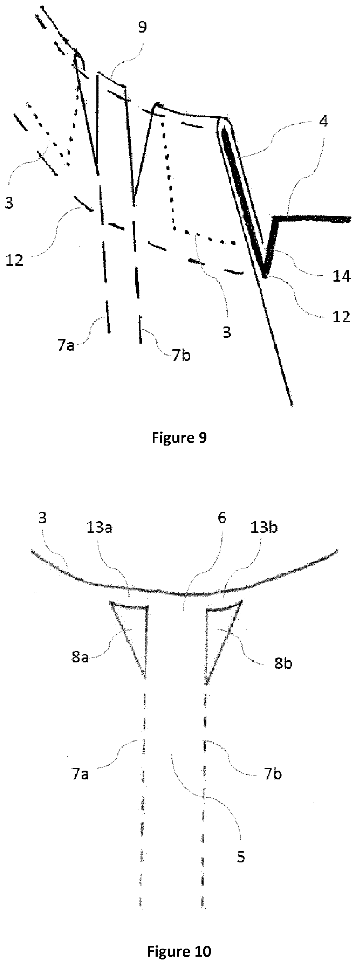

Figure 9 shows a perspective view of a cone sleeve after crimping on a plastic lid with a groove (14) such as the one disclosed in figures 6a, 6b and 6c. Figure 9 also shows a transversal view with the plastic lid shape in bold line. The lowest position of the level (12) of the plastic lid is indicated both on the perspective view and the transversal view. Openings (8a and 8b) extend above the lowest position of the level of the lid.
Figure 10 shows an enlarged and detailed view of the tear strip (5) area, of a particular embodiment of a cone sleeve according to the present invention. Two bridges (13a and 13b) closing the two openings (8a and 8b) respectively are indicated.

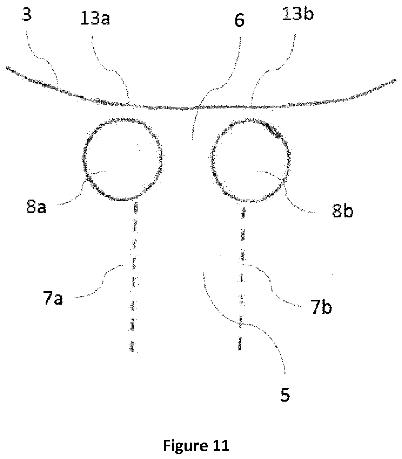

Figure 11 shows an enlarged and detailed view of the tear strip (5) area, of a further particular embodiment, wherein the two openings (8a and 8b) are circular.

### Detailed Description

A cone is a three-dimensional geometric shape that extends from a flat base to an apex. In the present invention this apex will be defined as the "bottom tip (2)", and the base is the matching the upper rim (3). The axis of a cone is the line passing through the apex, about which the base and the whole cone has a circular symmetry.

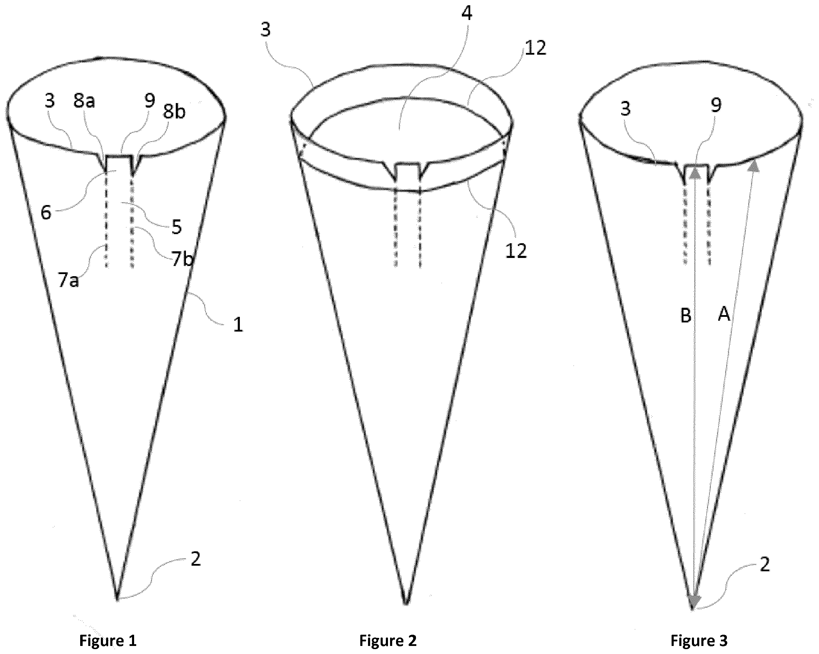

It is intended that the opening (8a) is adjoining with the weakening line (7a); and the opening (8b) is adjoining with the weakening line (7b). That is to say opening (8a) ends where the weakening line (7a) starts, and opening (8b) ends where the weakening line (7b) starts. This is shown in Figure 1.

This solution creates a continuity between the tear tab (6) and the tear strip (5). When a pulling force is applied to the tear tab (6), the energy will be channeled to the weakening lines (7a and 7b). The weakening lines will break and the sleeve will be open, giving easy access to the product in the cone sleeve packaging.

In the present context by "opening" is meant a void of material obtained e.g. by removal of material in the sleeve by cutting or stamping. Alternatively, the initial material may be shaped with the "openings" or "voids". The removal of the sleeve material e.g. by cutting or stamping removes material in order to leave an empty space or void next to the tear tab (6). In the context of the present invention said openings can have any shape. The size of the opening may be defined by the parameters: the width (10) and the depth (11). An example is shown in Figure 4 with the size expressed in millimeter.

Furthermore, in the present context by "weakening line" is meant a long, thin area where the material is less strong than the surrounding material. It could be obtained by scoring, perforation, cutting, or any other technical mean known in the art to reduce the thickness or the resistance of the material.

For the sake of clarity an enlarged view of the tear tab and the tear strip is proposed in Figure 4. Figure 4 highlight the width (10) and depth (11) of the openings (8a and 8b). Width and depth are not related to the shape of the openings. For example, in the present Figure 4, said openings (8a and 8b) have triangular shapes. However, the openings may be a variety of shapes, e.g. in embodiments in accordance with the present invention such as in Figure 11, the openings (8a and 8b) may be circular and in that case width (10) and depth (11) would have the same value corresponding to the diameter of the opening.

In a preferred embodiment of the cone sleeve according to the present invention, each of the two openings (8a and 8b) has a width (10) along the upper rim (3) comprised between 5 mm and 30 mm.

In a more particular embodiment the two openings may not have the same width, but each width (10) should be comprised between 5 mm and 30 mm. In a particular preferred embodiment of the invention, the opening (8a and 8b) may be triangular cuts.

It has been found that with a length of below 5 mm, the tear tab (6) may be overlap by the rest of the upper rim (3) when the crimping is completed; in that case the tear tab would not be easily accessible. With a length longer than 30 mm, the tear tab (6) has been found to be easily accessible, but after crimping the lid may be not well secured; this could cause involuntary aperture of the lid during manufacturing or transporting operations, and is therefore not preferred.

The accessibility of the tear tab after crimping is shown on Figure 8. Figure 8 shows how the tear tab (6) is isolated from the rest of the upper rim after crimping operation, making said tear tab easy to identify and to grab.

The two openings (8a and 8b) may have a geometrical shape, for example a triangle, a square, a rectangle, a circle, or part of a circle such as half or quarter of a circle, a flattened circle such as an oval, or part of an oval such as half or quarter of an oval (See for example figures 10 and 11).

In the present context by "crimping" is meant the action of joining two materials by deforming one or both, in order to hold them together. In the scope of the present invention, the upper rim (3) of the sleeves is folded and pressed in order to hold the lid (4) in place. After crimping, the upper rim is partly overlapping itself (figures 5a and 5b).

Crimping on a flat lid are shown in Figures 5a and 5b. Figure 5a shows the crimping on a flat lid with a sleeve that does not feature the present invention, the lid is hold in place but no tear tab is visible.

On the contrary, Figure 5b shows a crimping on a flat lid with a sleeve that does also not feature the present invention. Figure 5b shows that the tear tab (6) is accessible, the lid is hold in place and no gap is formed between the lid and the sleeve.

For product safety and quality the sleeve and lid have to provide a protection to the product they contain. If a gap is formed between the sleeve and the lid after crimping, then said product is not fully protected. This situation is undesirable as it might compromise the product quality and safety.

In the present context a "gap" means an area where the inner volume, defined by the sleeve and the lid after crimping, communicates with the external environment.

In another preferred embodiment, each of the two openings (8a and 8b) has a depth (11), along the cone sleeve side, in the range between a minimum 5 mm and a maximum, equal to the lowest position of the level (12) of the lid (4).

In a more particular embodiment the two openings may not have the same depth (11), but it should be in the range between 5mm and the lowest position of the level (12) of the lid (4).

It has been found that with a length of less than 5 mm, and the tear tab (6) may be overlap by the rest of the upper rim (3) when the crimping is completed. In that case the tear tab could not be easily accessible. On the other hand it has been found that the depth (11) should not exceed the lowest position of the level the lid can achieve in the cone sleeve, otherwise a gap may remain on the sleeve side after crimping (figures 6a, 6b, 6c and figure 7). The lowest position of the level (12) corresponds to a circular section of the cone sleeve wherein said circular section has the same diameter that the lid (Figure 2). For example, the depth (11) should preferably not exceed 10mm if a flat carton lid is used; or similarly preferably not exceed 25mm if a plastic lid with a groove is used.

The lowest position of the level (12) of the lid (4) is shown on Figure 2. Figure 2 shows a sleeve according to the present invention with a flat carton lid inserted in the sleeve and pushed down the inner volume of the sleeve so that each part of the edge of the lid is in contact the sleeve inner surface. When the lid cannot be placed further down within the conical shape of the cone sleeve, this is the lowest position of the lid. The lowest position of the level (12) of the lid depends on the lid diameter, on the diameter of the circle at the base (corresponding to the diameter of the circle matching the upper rim (3)), and on distance (A). Once these 3 parameters are known, the lowest position of the level of the lid can be calculated.

Figures 6b, 7 and 8 show how a plastic lid with a groove may be used to close the sleeve. Figure 6b shows the sleeve closed by a plastic lid with a groove. In this embodiment, again, the maximal depth (11) of the openings (8a and 8b) does not exceed the lowest position of the level (12) of the lid; thus no gap appears on the side of the sleeve. Figures 7, 8 and 9 show other views of this solution; the lid is hold in place after crimping, no gap can be seen and the tear tab is easily accessible.

In a particular example, in order to perform the crimping operation of the cone sleeve over a flat lid, the upper part of the sleeve is folded twice; in this solution, each of the two folding lines forms a circle parallel to the upper rim and which is between said upper rim and the lowest position of the level (12) of the lid (4). The sleeve is folded over itself to form a rigid rim; and in the meantime folded flat over the lid to hold it in place (see figures 5a and 5b).

Folding line of the sleeve over the lid may advantageously be at approximatively 1/3 of the distance between the upper rim (3) and the lowest position of the level (12) of the lid (4). The folding line of the sleeve, when the rim part is folded over itself may advantageously be at approximatively 2/3 of the distance between the upper rim (3) and the lowest position of the level (12) of the lid (4).

Surprisingly, it has been found that the openings (8a and 8b) do not compromise the crimping efficiency over a flat lid. The rigid rim may be weakened around the tear tab (6) position, but the lid remains well secured and does not move accidentally. It has been found that the depth (11) may even be superior to 2/3 of the interval between the upper rim (3) and the lowest position of the level (12) of the lid (4), the crimping quality is sufficient.

In another particular example, in order to perform the crimping operation of the cone sleeve over a plastic lid with a groove (14), the upper part of the sleeve is folded 1 time. In this embodiment, the folding line forms a circle parallel to the upper rim and which is between said upper rim and the lowest position of the level (12) of the lid (4). The sleeve is folded over the rim of the plastic lid and engage in the groove (14) of the plastic rim, see Figure 9.

The folding line of the sleeve over the lid could be located approximatively between the 1/3 and the 2/3 of the distance between the upper rim (3) and the lowest position of the level (12) of the lid (4), preferably at approximatively half of the distance between the upper rim (3) and the lowest position of the level (12) of the lid (4).

Again it has surprisingly been found, that the openings (8a and 8b) do not compromise the crimping efficiency over the lid. The lid remains well secured and does not move accidentally. It has been found that the depth (11) may be superior to half the distance between the upper rim (3) and the lowest position of the level (12) of the lid (4), the crimping quality is sufficient.

Advantageously, the two corners of the tear tab (6) are orthogonal.

In a particular embodiment of the invention, the tear tab (6) does not protrude beyond the upper rim (3). In other words the distance (A) is superior or equal to the distance (B). Distances (A) and (B) are shown on Figure 3. In this particular configuration the tear tab is not affected by the trimming operations.

In a particular preferred embodiment of the present invention, the tear tab (6) is not aligned with the upper rim (3) but shorter. In other words the distance (A) is superior to the distance (B). Distances (A) and (B) are shown on Figure 3. In a preferred configuration the distance between the bottom tip (2) and the upper rim (3) is equal at any point of the upper rim. This desirable configuration is obtained after the trimming operation. Said distance between the bottom tip (2) and any point of the upper rim (3) is defined as distance (A).

In the particular embodiment, the sleeve is cut out to provide an upper edge (9) of the tear tab (6) that is not aligned with the upper rim (3) of the sleeve (figure 6b). This creates a distance (B), between the upper edge (9) and the bottom tip (2), that is less than to the distance (A).

In this particular configuration shown in Figure 6b, the upper edge (9) of said tear tab (6) is neither aligned with the upper rim (3) of the sleeves, nor protruding from the upper rim. The upper edge (9) of the tear tab (6) is below the level of the upper rim (3). In other words it looks like the tear tab is "shorter" than the rest of the upper rim.

When the distances (A) and (B) are equivalent it allows the tear tab (6) to remain When the distances (A) and (B) are equivalent it allows the tear tab (6) to remain unaffected when the cone edge is trimmed to have a well aligned upper rim. To have the distance (B) less than the distance (A) gives a further advantage because the tear tab (6) will be less, or even not, affected by the crimping operation.

This particular embodiment increases the tear tab (6) accessibility and visibility after crimping (figures 6b, 7 and 8), and still the tear tab is not affected by the cone manufacturing, namely when the sleeve is trimmed.

In the present context by "trimming" is meant the action of removing excessive material in order to have lines, edges, or forms of well-defined shapes. Considering cone sleeve packaging; flat sheets are rolled into a conical shape on a mandrel; and the edge of the cone thus obtained is trimmed to be circular with a neat and regular edge.

In a further preferred example, the difference in length between the tear tab (6) and the upper rim (3) is in the range between 1 and 25 mm, preferably between 5 and 15 mm. That is to say, the difference between distance (A) and distance (B) is between 1 and 25 mm, preferably between 5 and 15 mm. Distance (A) is the distance from the tip of the cone and the upper rim (3) and distance (B) between the tip of the cone and the upper edge of the tear tab (6).

According to the invention, it is preferred that the weakening lines (7a and 7b) extend in straight lines along the cone sleeve side, perpendicularly to the upper rim (3). In this particular configuration, the weakening lines (7a and 7b) define a vertical tear strip (5) (figure 1). Vertical is defined respectively to the position of the cone sleeve in the consumers hand, with the upper rim (3) pointing upward, and the bottom tip (2) pointing downward.

In another preferred design of the present invention, the weakening lines (7a and 7b) extend in curved shapes along the cone sleeve side. This features enable diverse patterns to be created on the side of the cone such as spiral. This also enables the vertical tearing motion to be progressively transformed in a circumferential motion.

and 7b) are not parallel. For example the weakening lines could have a saw tooth shape or a wave shape. Moreover, the shape on weakening line (7a) may be shifted with respect to the shape on weakening line (7b). This characteristic may enable the creation of attractive pattern on the side of the cone and may add a play value to the tear strip (5).

In accordance with the present invention, the upper edge (9) of said tear tab (6) is connected to the upper rim (3) of the sleeve by two bridges (13a and 13b). In this particular design, the upper rim of the sleeve is continuous and the upper edge of the tear tab is merged in the upper rim. In other words, the two openings (8a and 8b) are closed by the two bridges (13a and 13b) respectively. This is shown in detail in figures 10 and 11.

It is advantageous to have these two bridges (13a and 13b) in order to hold in position the tear tab (6) while manufacturing the sleeve into a cone. Said bridges (13a and 13b) should be as thin as possible, preferably at maximum 3 mm, in order to break easily when the tear tab in pulled; but should be large enough to resist during the manufacturing and trimming operations of the sleeve, preferably at minimum 1 mm.

In a particular design the tear tab (6) may have a color to differentiate it from the rest of the sleeve and to increase the visibility of the tear tab.

The openings (8a and 8b) shown in figure 4 are interfering with the upper rim (3), they are not completely surrounded by the sleeve, thus creating notches in the sleeve upper rim. Whereas in Figure 10 and Figure 11, the openings (8a and 8b) are fully surrounded by the sleeve and thus do not create notches in the upper rim.

The cone sleeve according to the present invention could be made of a multi-layered material. By multi layered material is meant a material made by the superposition of at least two layers of different or similar materials. Said materials may be selected in a list comprising aluminum, paper, plastic films (polypropylene, polyester), or plastic coating (example polyethylene).

In a particular embodiment, it is desirable that at least one layer of said multi layered material is a moisture barrier layer such as a plastic film or a plastic coating, to avoid moisture transfer from the environment to the edible material packed in the cone sleeves. Preferably, said moisture barrier layer should not be perforated otherwise it may lose its properties. In this preferred embodiment, the weakening lines (7a and 7b) are performed in at least one of the layer of the multi-layered material the sleeve is made of; without involving, by perforation or cutting, the moisture barrier layer.

## Claims

1. A conical cone sleeve (1) for frozen confections, comprising a bottom tip (2) and an upper rim (3), and said upper rim forms a circular opening suitable for receiving a lid (4);
wherein the cone sleeve (1) comprises weakening lines (7a, 7b) defining a tear strip (5) with a tear tab (6) on its upper part, and
the cone sleeve (1) further comprising at least two openings (8a and 8b), at least one on each side of the tear strip (5), defining the tear tab part (6) of the tear strip (5) is **characterised in that** the upper edge (9) of said tear tab (6) is connected to the upper rim (3) of the sleeve by two bridges (13a and 13b).

2. A conical cone sleeve (1) for frozen confections according to claim 1, wherein the tear tab (6) does not protrude beyond the upper rim (3).

3. A cone sleeve according to claim 1 or 2, wherein each of the two openings (8a and 8b) has a width (10) along the upper rim (3) comprised between 5 mm and 30 mm.

4. A cone sleeve according to any of the preceding claims, wherein the tear tab (6) is not aligned with the upper rim (3).

5. A cone sleeve according to any of the preceding claims, wherein the difference in length between the tear tab (6) and the upper rim (3) is in the range between 1 and 25 mm, preferably between 5 and 15 mm.

6. A cone sleeve according to any of the preceding claims, wherein the weakening lines (7a and 7b) extend in straight lines along the cone sleeve side, perpendicularly to the upper rim (3).

7. A cone sleeve according to any of the preceding claims, wherein the weakening lines (7a and 7b) extend in curved shapes along the cone sleeve side.

8. A cone sleeve according to any of the preceding claims, wherein the sleeve is made of a multi-layered material.

9. A cone packaging comprising a cone sleeve according to any of the preceding claims and a lid (4), wherein each of the two openings (8a and 8b) has a depth (11), along the cone sleeve side, in the range between a minimum 5 mm and a maximum, equal to the lowest position of the level (12) of the lid (4).

10. A cone packaging according to claim 9, wherein the upper part of the sleeve is folded 1 time, and wherein the folding line forms a circle parallel to the upper rim and is between said upper rim and the lowest position of the level (12) of the lid (4).

11. A cone packaging according to claims 9 to 10, wherein the upper part of the sleeve is folded twice, and wherein each of the two folding lines forms a circle parallel to the upper rim, and is between said upper rim and the lowest position of the level (12) of the lid (4).

12. Use of the cone sleeve according to any of the preceding claims, as a packaging container for a wafer cone filled with a frozen confection such as ice cream, sorbet or combination of ice cream and sorbet.

13. A blank for forming a sleeve suitable for packaging an ice cream cone, the blank having an upper edge which is curved at least in part, two sides edges, at least two openings located near the upper edge and two weakening lines extending from the openings, radially to the upper edge, defining a tear tab part (6) of a tear strip, and wherein the upper edge (9) of said tear tab (6) is connected to the upper blank edge forming the upper rim (3) of the sleeve by two bridges (13a and 13b).

## Patentansprüche

1. Konische Konushülse (1) für gefrorene Süßwaren, umfassend
eine untere Spitze (2) und einen oberen Rand (3), wobei der obere Rand eine kreisförmige Öffnung bildet, die zur Aufnahme eines Deckels (4) geeignet ist;
wobei die Konushülse (1) Schwächungslinien (7a, 7b) umfasst, die einen Aufreißstreifen (5) mit einer Aufreißlasche (6) an seinem oberen Teil definieren, und
wobei die Konushülse (1) ferner
mindestens zwei Öffnungen (8a und 8b) umfasst, mindestens eine an jeder Seite des Aufreißstreifens (5),
die den Aufreißlaschenteil (6) des Aufreißstreifens (5) definieren, der **dadurch gekennzeichnet ist, dass**
die Oberkante (9) der Aufreißlasche (6) mit dem oberen Rand (3) der Hülse durch zwei Brücken (13a und 13b) verbunden ist.

2. Konische Konushülse (1) für gefrorene Süßwaren nach Anspruch 1, wobei die Aufreißlasche (6) nicht über den oberen Rand (3) hinausragt.

3. Konushülse nach Anspruch 1 oder 2, wobei jede der beiden Öffnungen (8a und 8b) eine Breite (10) entlang des oberen Randes (3) zwischen 5 mm und 30 mm aufweist.

4. Konushülse nach einem der vorstehenden Ansprüche, wobei die Aufreißlasche (6) nicht an dem oberen Rand (3) ausgerichtet ist.

5. Konushülse nach einem der vorstehenden Ansprüche, wobei der Längenunterschied zwischen der Aufreißlasche (6) und dem oberen Rand (3) im Bereich zwischen 1 und 25 mm, vorzugsweise zwischen 5 und 15 mm, liegt.

6. Konushülse nach einem der vorstehenden Ansprüche, wobei die Schwächungslinien (7a und 7b) in geraden Linien entlang der Seite der Konushülse senkrecht zum oberen Rand (3) verlaufen.

7. Konushülse nach einem der vorstehenden Ansprüche, wobei die Schwächungslinien (7a und 7b) in gekrümmten Formen entlang der Seite der Konushülse verlaufen.

8. Konushülse nach einem der vorstehenden Ansprüche, wobei die Hülse aus einem mehrschichtigen Material hergestellt ist.

9. Konusverpackung, umfassend eine Konushülse nach einem der vorstehenden Ansprüche und einen Deckel (4), wobei jede der beiden Öffnungen (8a und 8b) eine Tiefe (11) entlang der Seite der Konushülse im Bereich zwischen einem Minimum von 5 mm und einem Maximum, das gleich der untersten Position der Ebene (12) des Deckels (4) ist, aufweist.

10. Konusverpackung nach Anspruch 9, wobei der obere Teil der Hülse 1 mal gefalzt ist und wobei die Falzlinie einen Kreis parallel zum oberen Rand bildet und zwischen dem oberen Rand und der untersten Position der Ebene (12) des Deckels (4) liegt.

11. Konusverpackung nach Anspruch 9 bis 10, wobei der obere Teil der Hülse zweimal gefalzt ist und wobei jede der beiden Falzlinien einen Kreis parallel zum oberen Rand bildet und zwischen dem oberen Rand und der untersten Position der Ebene (12) des Deckels (4) liegt.

12. Verwendung der Konushülse nach einem der vorstehenden Ansprüche als ein Verpackungsbehälter für einen Waffelkonus, der mit einer gefrorenen Süßware wie Eiscreme, Sorbet oder einer Kombination aus Eiscreme und Sorbet gefüllt ist.

13. Zuschnitt zum Bilden einer Hülse, die zum Verpacken eines Eiscremekonus geeignet ist, wobei der Zuschnitt eine Oberkante, die mindestens teilweise gekrümmt ist, zwei Seitenkanten, mindestens zwei Öffnungen, die nahe der Oberkante angeordnet sind, und zwei Schwächungslinien, die von den Öffnungen radial zur Oberkante verlaufen und einen Aufreißlaschenteil (6) eines Aufreißstreifens definieren, aufweist und wobei die Oberkante (9) der Aufreißlasche (6) mit der Oberkante des Zuschnitts, die den oberen Rand (3) der Hülse bildet, durch zwei Brücken (13a und 13b) verbunden ist.

## Revendications

1. Enveloppe conique de cône (1) pour confiseries congelées, comprenant
une pointe inférieure (2) et un rebord supérieur (3), et ledit rebord supérieur forme une ouverture circulaire appropriée pour recevoir un couvercle (4) ;
dans laquelle l'enveloppe de cône (1) comprend des lignes d'affaiblissement (7a, 7b) définissant une bande déchirable (5) avec une languette déchirable (6) sur sa partie supérieure, et
l'enveloppe de cône (1) comprenant en outre
au moins deux ouvertures (8a et 8b), au moins une sur chaque côté de la bande déchirable (5),
définissant la partie de languette déchirable (6) de la bande déchirable (5) est **caractérisée en ce que**
le bord supérieur (9) de ladite languette déchirable (6) est relié au rebord supérieur (3) de l'enveloppe par deux ponts (13a et 13b).

2. Enveloppe conique de cône (1) pour confiseries congelées selon la revendication 1, dans laquelle la languette déchirable (6) ne fait pas saillie au-delà du rebord supérieur (3).

3. Enveloppe de cône selon la revendication 1 ou 2, dans laquelle chacune des deux ouvertures (8a et 8b) a une largeur (10) le long du rebord supérieur (3) comprise entre 5 mm et 30 mm.

4. Enveloppe de cône selon l'une quelconque des revendications précédentes, dans laquelle la languette déchirable (6) n'est pas alignée sur le rebord supérieur (3).

5. Enveloppe de cône selon l'une quelconque des revendications précédentes, dans laquelle la différence de longueur entre la languette déchirable (6) et le rebord supérieur (3) est dans la plage entre 1 et 25 mm, de préférence entre 5 et 15 mm.

6. Enveloppe de cône selon l'une quelconque des revendications précédentes, dans laquelle les lignes d'affaiblissement (7a et 7b) s'étendent en lignes droites le long du côté d'enveloppe de cône, perpendiculairement au rebord supérieur (3).

7. Enveloppe de cône selon l'une quelconque des revendications précédentes, dans laquelle les lignes d'affaiblissement (7a et 7b) s'étendent en formes incurvées le long du côté d'enveloppe de cône.

8. Enveloppe de cône selon l'une quelconque des revendications précédentes, dans laquelle l'enveloppe est constituée d'un matériau multicouche.

9. Conditionnement de cône comprenant une enveloppe de cône selon l'une quelconque des revendications précédentes et un couvercle (4), dans lequel chacune des deux ouvertures (8a et 8b) a une profondeur (11), le long du côté d'enveloppe de cône, dans la plage entre un minimum de 5 mm et un maximum, égal à la position la plus basse du niveau (12) du couvercle (4).

10. Conditionnement de cône selon la revendication 9, dans lequel la partie supérieure de l'enveloppe est pliée 1 fois, et dans lequel la ligne de pliage forme un cercle parallèle au rebord supérieur et est entre ledit rebord supérieur et la position la plus basse du niveau (12) du couvercle (4).

11. Conditionnement de cône selon les revendications 9 à 10, dans lequel la partie supérieure de l'enveloppe est pliée deux fois, et dans lequel chacune des deux lignes de pliage forme un cercle parallèle au rebord supérieur, et est entre ledit rebord supérieur et la position la plus basse du niveau (12) du couvercle (4).

12. Utilisation de l'enveloppe de cône selon l'une quelconque des revendications précédentes, en tant que contenant de conditionnement pour une gaufrette conique remplie d'une confiserie congelée telle qu'une crème glacée, un sorbet ou une combinaison de crème glacée et de sorbet.

13. Ébauche pour former une enveloppe appropriée pour le conditionnement d'un cône de crème glacée, l'ébauche ayant un bord supérieur qui est incurvé au moins en partie, deux bords latéraux, au moins deux ouvertures situées près du bord supérieur et deux lignes d'affaiblissement s'étendant à partir des ouvertures, radialement vers le bord supérieur, définissant une partie de languette déchirable (6) d'une bande déchirable, et dans laquelle le bord supérieur (9) de ladite languette déchirable (6) est relié au bord d'ébauche supérieur formant le rebord supérieur (3) de l'enveloppe par deux ponts (13a et 13b).
